# EUROPÄISCHE PATENTSCHRIFT

(11) **EP 4 688 484 B1**
(45) Veröffentlichungstag und Bekanntmachung des Hinweises auf die Patenterteilung: **26.08.2026**
(21) Anmeldenummer: 24718711.5
(22) Anmeldetag: 28.03.2024
(51) Int. Cl.: B60L 5/02

(54) **FAHRDRAHTSCHMIERGERÄT**
CONTACT WIRE LUBRICATION DEVICE
DISPOSITIF DE LUBRIFICATION DE FIL DE CONTACT

(30) Priorität: 28.03.2023 DE 102023107808
(43) Veröffentlichungstag der Anmeldung: 11.02.2026
(73) Patentinhaber: Simchen, Maximilian, 01157 Dresden (DE)
(72) Erfinder: Simchen, Maximilian, 01157 Dresden (DE)
(74) Vertreter: Janutta, Benjamin
(86) Internationale Anmeldenummer: PCT/EP2024/058565
(87) Internationale Veröffentlichungsnummer: WO 2024/200697

(56) Entgegenhaltungen:
- DE-A1- 102004 045 904
- DE-U1- 202004 008 632

## Beschreibung

Die Erfindung betrifft eine Vorrichtung zum Aufbringen von Schmier- oder Frostschutzmittel auf einen Fahrdraht einer Oberleitung, von dem ein elektrisch angetriebenes Fahrzeug mittels eines Stromabnehmers elektrische Energie abnimmt. Darüber hinaus betrifft die Erfindung eine Vorrichtung, die insbesondere zum Enteisen, d.h. zum präventiven Frostschutz eines Fahrdrahtes, geeignet ist, wobei der Betrieb der Vorrichtung nicht auf eine maximale Fahrzeuggeschwindigkeit begrenzt ist.

### Hintergrund

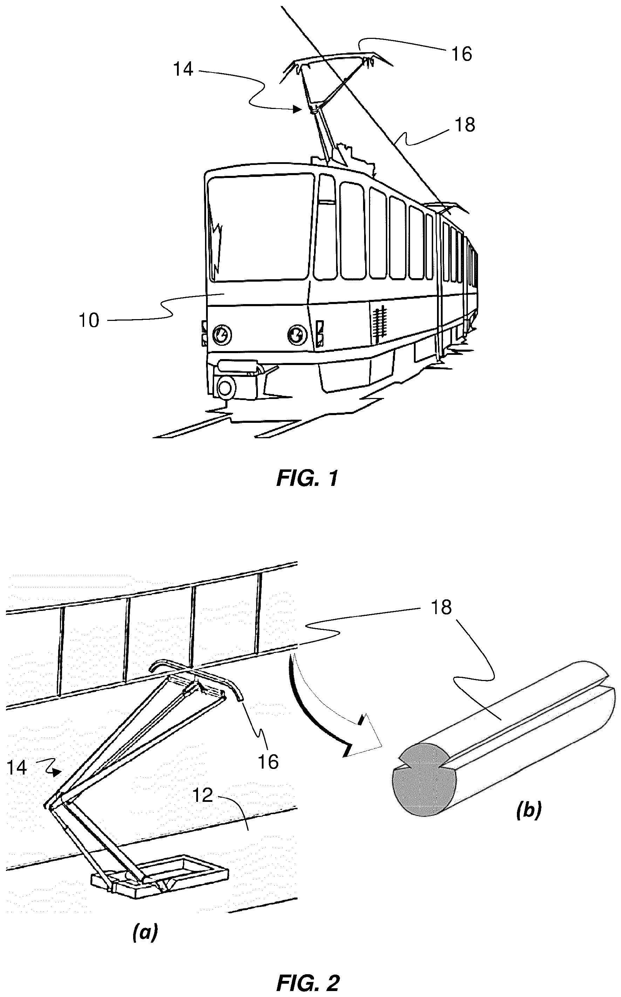

Oberleitungsfahrdrähte sind für die Bereitstellung von elektrischer Energie (Strom) allgemein bekannt. Solche Fahrdrähte werden beispielsweise für Schienenfahrzeuge wie Straßenbahnen oder Schnellzüge, aber auch Oberleitungsbusse (O-Busse) verwendet, um die Fahrzeuge während der Fahrt mit der benötigten elektrischen Energie zu versorgen. Wie in Figur 1 und 2 am Beispiel einer Straßenbahn dargestellt, der Fahrdraht ist üblicherweise oberhalb der Schienen (oder Straße) gespannt, um einen Pol der Spannungsquelle darzustellen, aus der sich das Fahrzeug (z.B. Straßenbahn) über einen Stromabnehmer (z.B. mit einem Schleifbügel oder -leiste) mit der benötigten Energie versorgt. Der Fahrdraht besteht normalerweise aus Kupfer und hat üblicherweise einen kreisförmigen Querschnitt, in den an der oberen Hälfte zwei V-förmige Rillen so eingeformt sind, dass dort Halteklammern eingreifen können (siehe Fig. 2(b)).

Während der Wintermonate können häufig Vereisungen an den Fahrdrähten auftreten und dadurch ungewollte Kontaktunterbrechungen verursachen. Diese können wiederum zu Beschädigungen von Fahrzeugkomponenten, zum Abrüsten oder Liegenbleiben des Fahrzeuges führen. Wenn hierdurch beispielsweise ein Ausfahrtsgleis während der Ausrückzeit blockiert wird, können erhebliche Verspätungen oder sogar Ausfälle entstehen. Außerdem entsteht durch das häufige Auftreten von Lichtbögen ein erhöhter Verschleiß an Schleifleiste und Fahrdraht.

Infolgedessen wird vor dem Einsetzen von Temperaturen unter dem Gefrierpunkt damit begonnen, den Fahrdraht (oder Fahrleitung) mit einem Frostschutzmittel, wie z.B. Glyzerin, zu "schmieren" oder zu benetzen. Dies geschieht üblicherweise mittels eines Filzrollen-Schmierbügels, der auf einem Betriebsfahrzeug (gem. BOStrab ein für die Instandhaltung von Betriebsanlagen eingesetztes Wartungsfahrzeug) oder auch auf einem Fahrzeug für Personentransport (wie z.B. Straßenbahn, Schnellzug, O-Bus) montiert ist. Je nach Größe des Streckennetzes und Anzahl der Schmierfahrzeuge werden die Schmierfahrten bis zu vierundzwanzig Stunden am Tag in drei Schichten durchgeführt. Eine durch einen Versorgungsschlauch ständig mit dem Frostschutzmittel (z.B. Glyzerin) getränkte Filzrolle überrollt hierbei den Fahrdraht. Solch eine Filzrollenkonstruktion ist zum Beispiel in der DE 20 2004 008 632 U1 näher beschrieben. Die Filzrolle ist hier auf einem umgebauten Stromabnehmer angebracht, der zusätzlich zum Traktionsstromabnehmer auf dem Fahrzeugdach montiert ist. In der Praxis erweist sich allerdings das Problem, dass überschüssiges Schmiermittel (Glyzerin) einfach in die Auffangwanne tropft und in das Fahrzeug geleitet wird, wobei das Schmiermittel nicht wiederverwendet werden kann, da es unter anderem stark mit Wasser, Kohle-Abrieb, Faser-Abrieb und/oder Schmutz aus der Umwelt (z.B. Laub) kontaminiert ist.

Zusätzlich kommt hinzu, dass die während der Fahrt angepresste Rolle direkt, d.h. die Umfangsgeschwindigkeit der Rolle entspricht der Fahrgeschwindigkeit, über den Kontakt mit dem Fahrdraht abrollt, sodass die bei höheren Geschwindigkeiten auftretenden rotierenden Massenkräfte im mechanischen System und die dadurch resultierende Gefahr des Abschleuderns des Schmiermittels die erlaubte Höchstgeschwindigkeit des Fahrzeugs auf ca. 30 km/h begrenzt. Der zudem unvermeidliche Faser-Abrieb kann zusammen mit den Verschmutzungen aus Fahrdraht und Kohleschleifleisten zu erheblichen Verstopfungen im Rücklauf führen, sodass es wiederholt zu Ausfällen oder Beschädigungen kommen kann. Der Wartungs- und Kostenaufwand einer solchen Vorrichtung ist deshalb relativ hoch.

Des Weiteren erfordern die gängigen Vorrichtungen eine Mindestanpresskraft (z.B. ca. 85 Newton) zwischen der Filzrolle und dem Fahrdraht, um die Mitnahme der Filzrolle sicherzustellen. Zusammen mit der Anpresskraft des Traktionsstromabnehmers kann die Vorrichtung somit eine große Belastung und Auslenkung des Fahrdrahtes bewirken. Dies vergrößert die Kollisionswahrscheinlichkeit mit weiteren Fahrleitungselementen, wobei im schlimmsten Fall der Totalverlust des Schmierbügels sowie ein Zerreißen der Fahrleitung eintritt.

Für den Fall, dass die Filzrolle blockiert (z.B. durch ein schwergängiges Lager oder selbst eine kleinere Verringerung der Anpresskraft, die auftritt, wenn der Ablauf durch Filzabrieb zugesetzt ist und die Wanne vollläuft), wird diese in kürzester Zeit zerstört und muss demnach erneuert werden. Um dem vorzubeugen, ist hierfür bisher eine elektronische Rotationsüberwachung notwendig.

Zusätzlich kann das Durchtränkungsverhalten der Filzrolle, das Abschleudern von Schmiermittel sowie das Ablaufverhalten des kontaminierten und hochviskosen Restschmiermittels erhebliche Schwankungen des Systemgewichts und der ohnehin sensiblen Anpresskraft verursachen. Eine ungleichmäßige Durchtränkung der Filzrolle kann zum Beispiel eine starke Unwucht und daraus resultierende Schwingungen an Bügel und Fahrleitung hervorrufen.

Demnach belastet das relativ hohe Systemgewicht des Filzrollen-Applikators das Bügelgestell, und kann hohe Massenkräfte hervorrufen, was wiederum ein "verstärktes" Bügelgestell (kräftigere Hubfeder) notwendig macht.

Die hohe Masse sorgt zudem für eine niedrige Eigenfrequenz der ausladenden Baugruppe, sodass diese besonders leicht durch Beschleunigungen aus der Fahrdynamik oder Unwucht der Rolle, selbst bei geringen Geschwindigkeiten, angeregt werden kann.

Alternative Mittel zur Enteisung eines Fahrdrahtes umfassen oftmals komplexe Vorrichtungen, wie beispielsweise die Vorrichtung in der DE 10 2011 054 610 A1, wo über Sensoren die momentane Lage des Fahrdrahts ermittelt wird, um dann über geeignete Versorgungsauslässe den naheliegenden Fahrdraht mit Frostschutzmittel zu benetzen oder zu besprühen.

Ein weiteres Problem, das durch den Einsatz herkömmlicher Schmierrollen, wie z.B. zylinderförmige Filzrollen, auftritt ist, dass die Rolle bei Fahrzeugrichtungsänderungen oder Überquerung einer anderen Strecke oftmals über sich kreuzende Fahrdrähte laufen muss, d.h. die Rolle wird von einem auf einer ersten vertikaler Ebene laufenden Fahrdraht auf einen in eine andere Richtung und auf einer unterschiedlichen vertikalen Ebene laufenden Fahrdraht gleitend geführt. Die Schleifleiste des Traktionsstromabnehmers ist demzufolge mit einem geeigneten Profil ausgestattet, sodass die Schleifleiste einfach gleitend von einem Fahrdraht auf den anderen Fahrdraht übergehen kann, ohne sich mit Fahrdrähten auf unterschiedlichen vertikalen Ebenen zu verfangen. Dahingegen muss beim Einsatz einer herkömmlichen (zylindrischen) Schmierrolle das Fahrzeug vor der Fahrdrahtkreuzung gewöhnlich anhalten, sodass die Schmierrolle abgesenkt und das Fahrzeug in Richtung des zweiten Fahrdrahts gefahren werden kann, wo die Schmierrolle dann wieder mit dem Fahrdraht in Kontakt gebracht wird. Ein übergangsloses Abgleiten von einem Fahrdraht auf den anderen ist durch das gerade Profil der Schmierrolle nicht problemlos (d.h. verschleißfrei und unter Ausschluss von Beschädigungen an Schmierbügel und Fahrleitungssystem) möglich.

Es ist daher eine Aufgabe der vorliegenden Erfindung, eine Fahrdrahtenteisungsanlage so zu verbessern, dass diese eine möglichst einfache, strapazierfähigere und somit zuverlässigere Konstruktion ist, um übliche Verschleißschäden zu vermeiden oder zumindest zu minimieren. Weiterhin soll die Fahrdrahtenteisungsanlage so verbessert werden, dass erforderliche Anpresskräfte reduziert und Fahrzeughöchstgeschwindigkeiten maximiert werden. Ferner soll zumindest eine Ausführungsform der Fahrdrahtenteisungsanlage so verbessert werden, dass die Schmierrolle genauso wie die Schleifleiste zur Stromübertragung bei Richtungsänderungen des Fahrzeugs ohne Unterbrechung von einem Fahrdraht auf den anderen Fahrdraht gleiten kann.

### Zusammenfassung der Erfindung

Diese Aufgabe wird durch die Vorrichtung mit den Merkmalen des Anspruchs 1 erfindungsgemäß gelöst. Vorteilhafte Ausgestaltungen der Erfindung sind in den abhängigen Ansprüchen angegeben.

Gemäß einer Ausführungsform ist eine erfindungsgemäße Vorrichtung zum Aufbringen von fließfähigem Frostschutzmittel auf einen Fahrdraht einer Oberleitung, von dem ein elektrisch angetriebenes Fahrzeug mittels eines Stromabnehmers elektrische Energie abnimmt, vorgesehen. Die Vorrichtung umfasst jeweils eine Halteeinrichtung, die sich vom Fahrzeug in Richtung Fahrdraht erstreckt; eine horizontal und quer zur Fahrzeuglängenachse ausgerichtete Transferrolle, die axial drehbar mit der Halteeinrichtung gekoppelt ist, und die mit dem Fahrdraht in einen Kontakt bringbar ist und einen offenen Behälter für das Frostschutzmittel, der unterhalb der Transferrolle und eine Umfangsfläche der Transferrolle teilweise umschließend derart angeordnet ist, dass die Transferrolle mit dem über den Behälter zugeführten Frostschutzmittel mittels einer Drehbewegung benetzbar ist, dadurch gekennzeichnet, dass die Vorrichtung außerdem Mittel zum Steuern der Drehbewegung aufweist, die dazu eingerichtet sind, eine Umlaufgeschwindigkeit der Transferrolle dahingehend zu begrenzen, dass sich die Transferrolle langsamer dreht als bei einem gleitfreien Abrollen entlang des Fahrdrahtes.

Dadurch, dass die Vorrichtung mit den obigen Mitteln zum Steuern der Drehbewegung ausgebildet ist und die Transferrolle am Fahrdraht entlanggleiten kann, muss das Fahrzeug die Fahrgeschwindigkeit nicht reduzieren, da die Transferrolle durch die Mittel zum Steuern der Drehbewegung immer mit der gewünschten Drehzahl laufen kann (aktiv oder passiv). Dadurch wird auch die Menge des transportierten Schmiermittels optimal reguliert und das System kann so ausgelegt werden, dass es stets mit kleinstmöglichen Anpresskräften betrieben werden kann.

Vorteilhaft ist es, wenn ein Material der Transferrolle tribologisch mit dem Fahrdraht derart optimiert ist, dass der Fahrdraht und die sich zum Fahrdraht relativ bewegende Transferrolle innerhalb eines vorbestimmten Anpressdruckbereichs roll-gleitend zusammenwirken, wobei das Material insbesondere ein Kunststoff, ein Kunststoff mit einer Grundmatrix aus fluorstabilisiertem Kunststoff dem mit einem Festschmierstoff gefüllt ist, oder ein metallischer Werkstoff mit guten Gleiteigenschaften, insbesondere Messing oder ein Metall mit einer abriebfesten Beschichtung oder einem aufgebrachten Gleitlack, insbesondere Aluminium mit Nikasilbeschichtung ist.

Durch das tribologisch optimierte glatte Material wird im Wesentlichen ein verschleißfreies roll-gleitendes Zusammenwirken zwischen der Transferrolle und dem Fahrdraht bewirkt, sodass die Umlaufgeschwindigkeit der Transferrolle nicht wie bei der Filzrolle direkt von der Fahrzeuggeschwindigkeit abhängt und somit prinzipiell keine Geschwindigkeitsbegrenzung des Fahrzeugs erforderlich ist. Das heißt, dass sich die Transferrolle unabhängig von der Fahrzeuggeschwindigkeit mit einer vorbestimmten Umlaufgeschwindigkeit drehen kann, um beispielsweise ein fliehkraftbedingtes Abschleudern zu vermeiden und ohne den Verschleiß zwischen der Transferrolle und dem Fahrdraht wesentlich zu erhöhen.

Das Mittel zum Steuern der Umlaufgeschwindigkeit der Transferrolle kann die Umlaufgeschwindigkeit beispielsweise durch Veränderung des Anpressdruckes zwischen der Transferrolle und dem Fahrdraht variieren, sofern die Rollendrehzahl nicht mittels eines Motors vorgegeben ist, sondern durch eine passiv wirkende Bremseinrichtung begrenzt wird.

Vorteilhafterweise ist das Material der Transferrolle ein Kunststoff, der mindestens einen Festschmierstoff enthält. Vorzugsweise umfasst der Festschmierstoff eine oder mehrere der folgenden Substanzen, wie z.B. Graphit, MoS₂, PTFE, synthetische Metallsulfide. Die Transferrolle kann somit auf einfachste Weise mit der Halterung lauffähig über ein schmiermittelfreies Gleitlager gekoppelt werden.

Weiterhin kann die Transferrolle als Hohlrolle aus einem metallischen Werkstoff mit guten Gleiteigenschaften, wie z.B. Messing, best. Gusssorten oder mit einer besonders abriebfesten Beschichtung (z.B. Aluminium mit Nikasilbeschichtung, aus Motorenbau bekannt) bzw. mit aufgebrachten Gleitlacken gefertigt werden.

Vorzugsweise ist die Umfangsfläche der Transferrolle im Wesentlichen konvex ballig ausgebildet. Dadurch wird die Kontur der Transferrolle der konventionellen Schleifleiste angepasst, und die angepasste, d.h. konvex-ballige Kontur der Transferrolle erlaubt ein problemloses Übergleiten von einem Fahrdraht auf einen anderen Fahrdraht (z.B. bei Richtungsänderungen) bzw. das Überfahren eines quer kreuzenden Fahrdrahtes, ohne sich dabei zu verfangen oder zu verheddern.

Es ist weiterhin vorteilhaft, wenn die Halteeinrichtung als Mittel zum Steuern der Umlaufgeschwindigkeit der Transferrolle eine Vorspanneinrichtung zum Bereitstellen des vorbestimmten Anpressdruckes zwischen Fahrdraht und Transferrolle umfasst. Dadurch ist der Anpressdruck zwischen Fahrdraht und Transferrolle über die Vorspanneinrichtung wahlweise veränderbar. Insbesondere Steuern die Mittel zum Steuern der Umlaufgeschwindigkeit die Umlaufgeschwindigkeit der Transferrolle so, dass der Anpressdruck für hohe Fahrtgeschwindigkeiten reduziert wird, so dass die Transferrolle sich langsamer dreht als bei einem gleitfreien Abrollen entlang des Fahrdrahts, um so das Abschleudern des Frostschutzmittels bei hohen Fahrtgeschwindigkeiten zu verhindern.

Alternativ oder ergänzend zu der Veränderbarkeit des Anpressdrucks, ist es denkbar, dass der Anpressdruck zwischen Fahrdraht und Transferrolle über die Vorspanneinrichtung proportional zur Geschwindigkeit des Fahrzeugs veränderbar ist. Hier könnten dafür geeignete Mittel verwendet werden, die den Anpressdruck in Abhängigkeit der Fahrzeuggeschwindigkeit regeln können (z.B. über ein Steuergerät oder durch den Fahrtwind verursachte Auftriebs- oder Abtriebskräfte). Es ist weiterhin denkbar, dass die Vorspanneinrichtung ein Federsystem umfasst. Das Federsystem kann ein einfaches Federsystem oder ein aktiv steuerbares Federsystem sein. Alternativ kann der Anpressdruck auch über eine Vorspanneinrichtung mit mindestens einem steuerbaren Aktuator variiert werden. Hierfür können beispielsweise elektrische oder pneumatische oder auch hydraulische Aktuatoren eingesetzt werden.

Vorzugsweise umfasst die Halteeinrichtung ein starr gekoppeltes Halteelement, das mit der Transferrolle ein Gleitlager bildet. Durch den Einsatz eines tribologisch günstigen Kunstoffs mit eingelagertem Festschmierstoff ist eine Selbstschmierung der Gleitfläche zwischen dem feststehenden Halteelement und der drehbaren Transferrolle gewährleistet. Bei einer ersten vorteilhaften Ausführungsform ist das Halteelement eine Welle, und insbesondere eine Hohlwelle. Bei einer weiteren vorteilhaften Ausführungsform umfasst das Halteelement zwei axial angeordnete Lagerzapfen. Die Ausführungsformen ermöglichen einen konstruktiven Leichtbau bei minimalen Verschleiß, da zum einen separate Lagerbauteile entfallen und zum anderen die Massenkräfte (z.B. aus schwankender Fahrdrahthöhe oder aus der Fahrdynamik des Fahrzeuges) relativ konstant und auf einem Minimum gehalten werden.

Der Behälter der erfindungsgemäßen Vorrichtung hat vorzugsweise mindestens einen an einem axialen Ende angeordneten Zulauf zur Zuführung, und einen mittig zwischen den sich gegenüberliegenden axialen Enden an einer Seitenwand des Behälters angeordneten Ablauf zur Abführung des Frostschutzmittels. Es hat sich weiterhin als besonders vorteilhaft erwiesen, wenn der Behälter zwei Zuläufe umfasst, die an den sich gegenüberliegenden axialen Enden des Behälters angebracht sind. Weiterhin ist es vorteilhaft, wenn der mindestens eine Zulauf mit dem Ablauf einen Fluidkreislauf bildet und kontinuierlich Frostschutzmittel durch den Behälter strömt.

Die seitlich angebrachten Zuläufe und der zentral positionierte Ablauf erlauben demnach eine kontinuierliche Strömung, die Frostschutzmittel von den voraussichtlich weniger beschmutzten Außenseiten (seltener Fahrdrahtkontakt) hin zu der voraussichtlich stärker beschmutzten Mitte der Transferrolle (häufiger Fahrdrahtkontakt) transportiert. Dadurch wird gewährleistet, dass immer ausreichend "frisches" Frostschutzmittel für die Benetzung der Transferrolle zur Verfügung steht und die kontaminierten Anteile zuerst verbraucht werden. Die Zuläufe sind zudem hydraulisch abgeglichen, um auf beiden Seiten den selben Durchfluss zu erzielen.

Vorzugsweise ist der Ablauf in einem vorbestimmten Abstand vom Behälterboden angebracht, wobei der Ablauf weiter vom Behälterboden beabstandet ist als der mindestens eine Zulauf. Der vorbestimmte Abstand des Ablaufs vom Behälterboden bestimmt zum einen den Pegelstand des Frostschutzmittels, aber stellt auch durch seine mittige Position nahe des Flächenschwerpunktes des Flüssigkeitsspiegels sicher, dass bei Querbeschleunigungen oder Neigung des Behälters (z.B. Halt in Gleisüberhöhung, oder Fliehkräfte bei Richtungsänderung) keine Füllmengenänderung auftritt, was wiederum das Systemgewicht und die daraus erforderliche Anpresskraft zwischen dem Fahrdraht und der Transferrolle während der Fahrt konstant hält. Des Weiteren beträgt die freie Fließstrecke einer jeweiligen Frostschutzmittelflut nur die Hälfte der Rollenlänge (Applikator), wodurch auch die Pegeldifferenz, die aufgrund der relativ hohen Viskosität des Fluides (z.B. Glyzerin) auftritt, halbiert wird.

Vorzugsweise ist die Umlaufgeschwindigkeit und/oder die Umlaufrichtung der Transferrolle unabhängig von der Fahrzeuggeschwindigkeit regelbar oder kontrollierbar. In einer vorteilhaften Ausführungsform wird die Umlaufgeschwindigkeit und/oder die Umlaufrichtung der Transferrolle über einen mit der Transferrolle gekoppelten Motor gesteuert oder kontrolliert. In einer anderen, alternativen Ausführungsform wird die Umlaufgeschwindigkeit der Transferrolle über eine mit der Transferrolle gekoppelten Bremse gesteuert oder kontrolliert. Hier kann die Bremse eine einfache Reibungsbremse, eine Fliehkraftbremse oder eine Viskosebremse sein, aber auch eine elektrodynamische Bremse, z.B. generatorische Bremse oder Wirbelstrombremse (vorteilhaft, weil temperaturunabhängig und präzise einstellbar), wobei die Bremse beispielsweise über einen mit der Transferrolle gekoppelten Generator betätigt werden kann.

Alternativ oder zusätzlich kann die Schmiermittelfüllung in der Wanne als Viskosebremse genutzt werden, wobei die Justage der Förder-Drehung durch Änderung der Anpresskraft an den Fahrdraht und/oder die Erhöhung/Senkung des Pegelstands in der Wanne (Position Überlauf oder Pegelsensor) erreicht wird.

Dadurch kann die Umlaufgeschwindigkeit der Transferrolle entweder aktiv über einen Motor konstant gehalten, oder passiv über eine Bremse auf ein Maximum geregelt werden, der Motor bzw. die Bremse stellen somit jeweils Mittel zum Steuern der Drehbewegung der Transferrolle dar. Durch den forcierten Antrieb bzw. die Bremseinrichtung wird die Drehzahl und das Abgleiten erzwungen, und zwar auch, wenn das Tribosystem zwischen Rolle und Fahrdraht, aus welchen Gründen auch immer, gestört ist, d.h. z.B. dass sich der Reibwert oder die Anpresskraft durch äußere Einflüsse verändert hat. Hierdurch kann sich zwar der Verschleiß erhöhen, jedoch sind Betriebssicherheit und Funktionssicherheit dennoch jederzeit gegeben. Besonders gefährliche, durch unkontrollierte Unwucht hervorgerufene Schwingungen können demnach nicht entstehen.

Weiterhin kann die Umlaufrichtung aktiv über einen Motor bestimmt werden. Über die Drehzahl, die Umlaufgeschwindigkeit oder Umlaufrichtung der Transferrolle kann somit die Menge des durch die Transferrolle geförderten Frostschutzmittels auf ein gewünschtes Maß eingestellt werden. Des Weiteren ist das sichere Mitnehmen der Transferrolle durch den Fahrdraht nicht mehr erforderlich und auch nicht erwünscht. Die Transferrolle kann dadurch stets mit kleinstmöglichen Anpresskräften gefahren werden (d.h. kleinstmöglich, um ein roll-gleitendes Zusammenwirken zwischen dem Fahrdraht und der tribologisch optimal angepassten Transferrolle zu erlangen), was wiederum den Transferrollenverschleiß, sowie die Fahrdrahtauslenkung und -belastung wesentlich verringert.

### Kurze Beschreibung der Figuren

Die nachfolgende Beschreibung bevorzugter Ausführungsformen der Erfindung dient im Zusammenhang mit den Zeichnungen der näheren Erläuterung. Es zeigen:
**Fig.1** ein allgemein übliches Schienenfahrzeug (Straßenbahn) das über einen Stromabnehmer mit Schleifleiste elektrische Energie vom Fahrdraht abnimmt;
**Fig.2** (a) eine perspektivische Ansicht eines auf dem Fahrzeugdach montierten gebräuchlichen Stromabnehmers der mit dem Fahrdraht in Kontakt gebracht ist, und (b) eine perspektivische Teilansicht eines Rillenfahrdrahtes;
**Fig.3** eine schematische Schnittdarstellung der Schmiervorrichtung der vorliegenden Erfindung (a) entlang einer Transversalebene und den Fahrdraht roll-gleitend kontaktierend, und (b) ein Teilstück entlang einer Frontalebene;
**Fig.4** (a) eine Frontalansicht einer Schleifleiste eines gebräuchlichen Stromabnehmers, und (b) eine teilweise geschnittene Frontalansicht der Schmierrollenvorrichtung der vorliegenden Erfindung;
**Fig.5** (a) eine schematische Darstellung des Behälters ohne die Transferrolle, und eine geschnittene Frontalansicht des mit Frostschutzmittel gefüllten Behälters (b) ohne Neigung oder Querbeschleunigung durch das Fahrzeug, und (c) durch Neigung oder Querbeschleunigung verlagerter Schmiermittelspiegel;
**Fig.6** eine schematische Darstellung der Frostschutzmittelversorgung über separate Vorrats- und Auffangbehälter, und
**Fig.7** (a) eine schematische Darstellung einer alternativen Frostschutzmittelversorgung über eine einen kontaminationslosen Rücklauf bewirkende Speiseeinheit und einen Vorratsbehälter, und (b) eine Schnittdarstellung der Speiseeinheit.

### Beschreibung ein oder mehrerer Ausführungsformen

Die Begriffe "Schmiermittel", "Frostschutzmittel, "Glyzerin", "Enteisungsmittel oder - medium" sind in der folgenden Beschreibung synonym zu verstehen. Die Begriffe "Behälter" und "Wanne" sind in der folgenden Beschreibung als gleichbedeutend zu verstehen und beschreiben das der Transferrolle zugewandte und mit Schmiermittel versorgte Gefäß.

Spezielle Begriffe wie "rechts", "links", "oben", "unten", "vorne", "hinten", "hoch" und "runter" kennzeichnen Richtungen in den beigefügten Figuren mit Bezug auf die jeweilige Komponente, Einrichtung oder Vorrichtung, wenn betriebsfähig montiert. Die Begriffe "innen" und "außen" kennzeichnen Richtungen mit Bezug auf ein geometrische Zentralachse oder Zentrum einer jeweils beschriebenen Komponente, Einrichtung oder Vorrichtung, wobei die Bedeutung aus der Beschreibung offensichtlich ist.

Darüber hinaus beschreiben die Begriffe "verbunden", "angebracht", "gekoppelt", "montiert" jeweils direkte Verbindungen zwischen zwei Gliedern oder Komponenten, d.h. ohne ein dazwischenliegendes Glied, aber auch, indirekte Verbindungen zwischen Gliedern oder Komponenten, d.h. mit mindestens einem dazwischenliegenden Glied.

Weiterhin, falls nicht anders angegeben, zeigt die Verwendung ordinaler Adjektive wie z.B. "erster", "zweiter", "dritter" usw. lediglich verschiedene Instanzen gleicher Objekte und bedeutet nicht, dass diese Objekte in einer bestimmten Reihenfolge sein müssen, weder zeitlich, räumlich oder in einer bestimmten Rangfolge.

Bezugnehmend auf die Figuren 1, 2 und 3, wird die erfindungsgemäße Schmierrollenvorrichtung 100 vorzugsweise auf dem Dach 12 eines Fahrzeugs 10, insbesondere eines Schienenfahrzeugs, befestigt. Das Fahrzeug 10 weist mindestens ein erstes Stromabnehmergestell 14 auf, das auf dem Dach 12 des Fahrzeugs 10 befestigt ist und gleichzeitig als Stromabnehmer der Energieversorgung des Fahrzeugs 10, aber auch als Halterung für die Schmierrollenvorrichtung 100 dienen kann. Hierbei würde die Schmierrollenvorrichtung 100 beabstandet von und parallel zur Schleifleiste 16 an dem Stromabnehmergestell 14 befestigt.

In einer bevorzugten Ausführungsform ist ein zweites, im wesentlichen gleichwertiges Stromabnehmergestell (nicht gezeigt) auf dem Dach 12 des Fahrzeugs 10 beabstandet von und vor oder hinter dem ersten Stromabnehmergestell 14 befestigt. Das zweite Stromabnehmergestell dient demzufolge nicht der Energieversorgung des Fahrzeugs 10, sondern ausschließlich als Halteeinrichtung für die Schmierrollenvorrichtung 100.

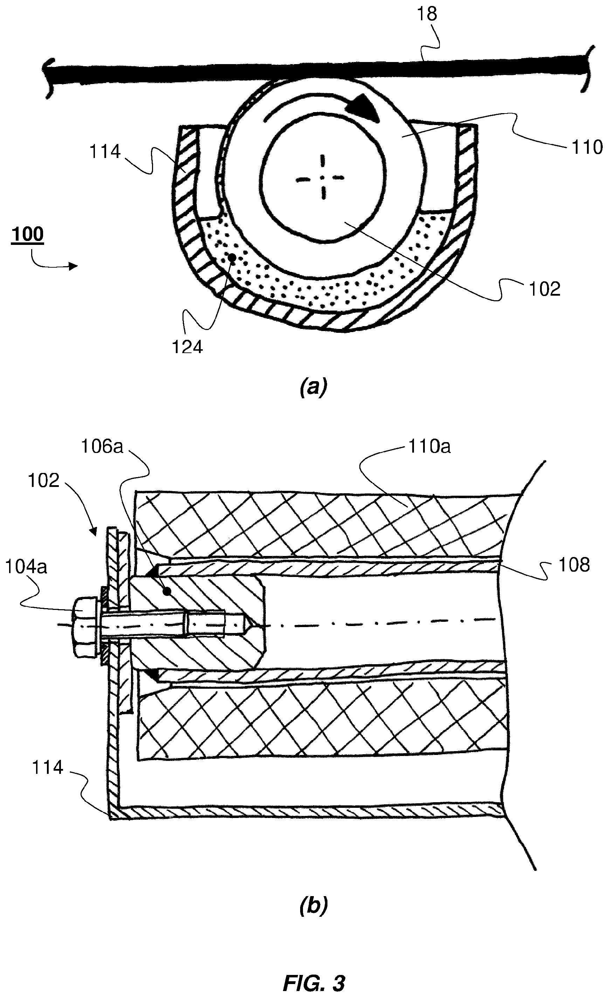

Die Schmierrollenvorrichtung 100 ist in der Figur 3 in einer schematischen Schnittdarstellung (a) entlang der Transversalebene parallel zur Fahrtrichtung, und (b) entlang der Frontalebene orthogonal zur Fahrtrichtung dargestellt. Die Schmierrollenvorrichtung 100 ist über eine fest mit dem oberen Ende des Stromabnehmergestells verbundene Halterung 102 oder Tragvorrichtung funktionsbereit gekoppelt und eine Transferrolle 110 ist gleitfähig drehbar auf der Halterung 102 gelagert.

In einer Ausführungsform der Erfindung (siehe Figur 3(b)) ist die Transferrolle 110a in der Form eines Hohlzylinders der auf einer durchgehenden Achse oder Welle 108 gleitfähig drehbar gelagert ist. Die Achse oder Welle 108 ist vorzugsweise eine Hohlachse, die über geeignete Zapfen 106a,b und Maschinenschrauben 104a,b fest mit einem oberen Ende des Stromabnehmergestells verbunden ist. Dadurch wird das Gewicht der Konstruktion und die daraus resultierenden Massen- und Trägheitsmomente so niedrig wie möglich gehalten und eine mögliche Umlaufbiegung der Achse 108 wird durch die feste Verbindung mit dem Stromabnehmergestell vermieden. Außerdem müssen die Achse/Welle 108 und Transferrolle 110a nicht jeweils selbsttragend sein, sodass ein konstruktiver Leichtbau erreicht wird. Zwischen Hohlachse und Rolle ist keine Presspassung erforderlich, sodass ein rascher und unkomplizierter Austausch der Transferrolle 110a bei Verschleiß gewährleistet ist.

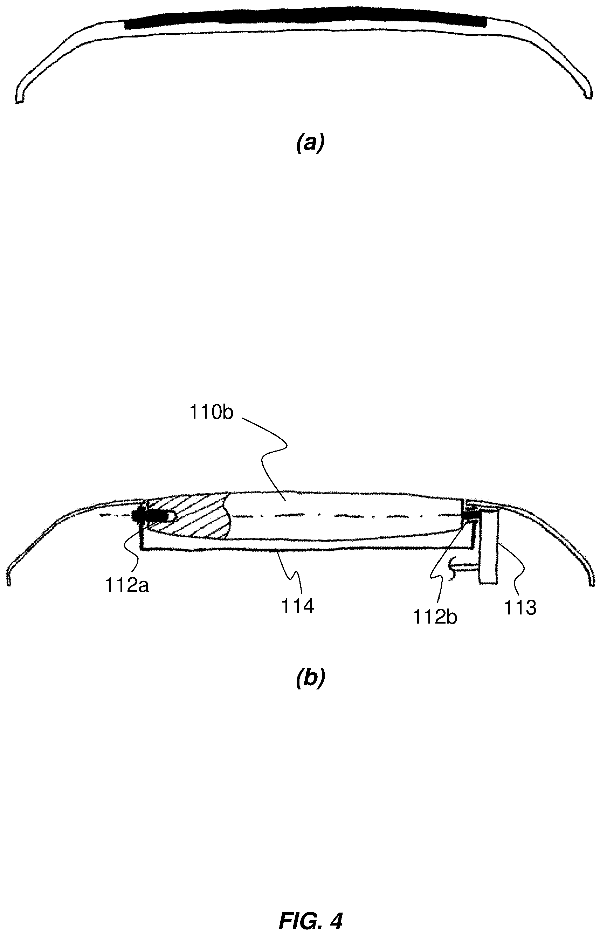

In einer alternativen Ausführungsform der Erfindung ist die Transferrolle 110b in der Form eines Vollzylinders (siehe Figure 4(b)) oder Hohlzylinders (nicht gezeigt), der auf zwei geeigneten Lagerdornen oder -zapfen 112a gleitfähig drehbar gelagert ist. Die Lagerdorne oder -zapfen 112a sind jeweils fest mit einem entsprechenden oberen Ende des Stromabnehmergestells verbunden und bilden mit entsprechenden axial zentral ausgerichteten Aushöhlungen der Transferrolle 110b ein Gleitlager. Eine weitere alternative Ausführungsform sieht eine Welle (nicht gezeigt), einen Wellenstumpf 112b oder zwei Wellenstümpfe vor, die fest mit der Transferrolle 110b verbunden sind und die eine Lagerung der Transferrolle 110b in Lagerbuchsen oder Wälzlagern ermöglichen. Des Weiteren kann die Welle oder ein Wellenstumpf 112b dazu dienen, die Transferrolle 110b mit einem außerhalb der Wanne 114 liegenden Antrieb 113 oder einer Bremse zu koppeln. Bei dieser Ausführungsform ist eine bewegliche Dichtung zwischen Wannen-Stirnwand 120a,b und Welle oder Wellenstumpf vorgesehen. Vorzugsweise hat die Transferrolle 110b eine konvex ballige Form, die der Kontur einer konventionellen Schleifleiste angepasst ist, sodass die Transferrolle 110b bei einem Fahrdrahtübergang oder einer Fahrdrahtkreuzung mit Fahrdrähten 18 auf unterschiedlich liegenden vertikalen Ebenen problemlos (d.h. ohne sich zu verfangen) und verschleißfrei übergleiten kann.

Weiterhin besteht die Transferrolle 110b aus einem reibungsgünstigen Werkstoff, der für das Zusammenwirken mit dem Fahrdraht 18 tribologisch optimiert ist, d.h. die Reibung zwischen der in Relativbewegung befindlichen Oberflächen der Transferrolle 110a, 110b und des Fahrdrahtes 18 ist derart optimiert, dass die Transferrolle 110a, 110b roll-gleitend mit dem Fahrdraht 18 innerhalb eines bestimmten Geschwindigkeitsbereiches des Fahrzeugs 10 zusammenwirkt. Der tribologisch optimierte Werkstoff ist weiterhin derart ausgebildet, dass der Fahrdraht 18 einen minimalen Verschleiß im Zusammenwirken mit der Transferrolle 110a, 110b verursacht. Der tribologisch optimierte Werkstoff enthält ein oder mehrere Festschmierstoff(e), die eine Selbstschmierung der Gleitflächen zwischen der Transferrolle 110a, 110b und der Halterung 102 (feststehende Welle oder Hohlwelle 108, und feststehende Lagerzapfen 112a,b) gewährleisten. Typische Festschmierstoffe sind beispielsweise Graphit, Molybdändisulfid (MoS₂), Wolframdisulfid (WS₂), Graphen und Polytetrafluoräthylen (PTFE), oder auch eine Kombination dieser Stoffe. Einsatz und Wirkung von Festschmierstoffen für Gleitlager sind in der Technik allgemein bekannt und werden deshalb nicht weiter ausgeführt.

Der tribologisch optimierte Werkstoff ist vorzugsweise ein Kunststoff, z.B. ein Kunststoff mit einer Grundmatrix aus fluorstabilisiertem Kunststoff (ähnlich "Teflon") der mit einem Festschmierstoff (z.B. Graphit) gefüllt ist.

Alternativ können auch metallischen Werkstoff mit guten Gleiteigenschaften, wie z.B. Messing, bestimmte Gusssorten oder Metalle mit einer besonders abriebfesten Beschichtung (z.B. Aluminium mit Nikasilbeschichtung) bzw. mit aufgebrachten Gleitlacken eingesetzt werden.

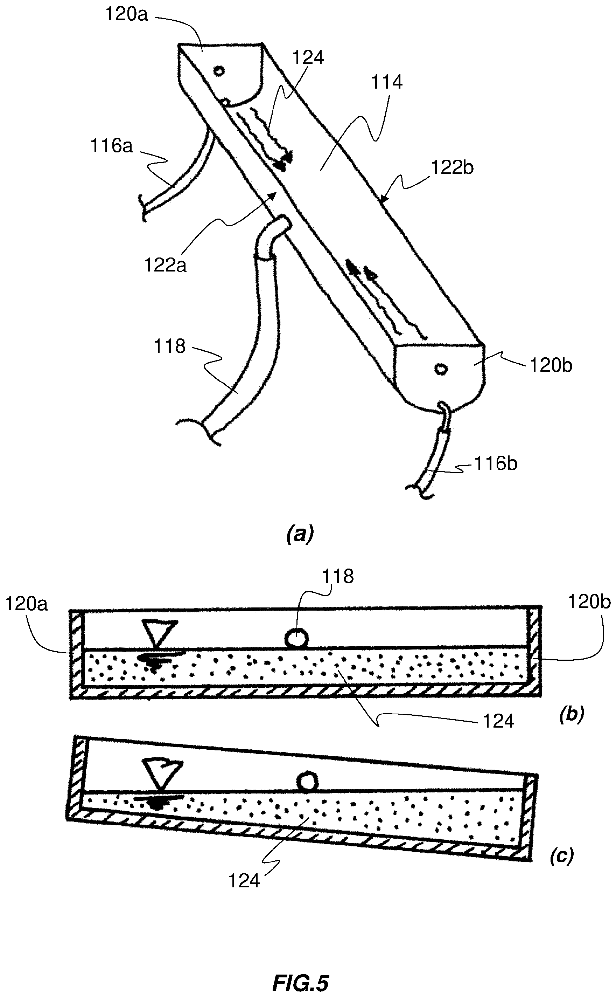

Bezugnehmend auf die Figuren 3(a) und 5(a), (b) und (c), ein Behälter 114 ist vorzugsweise wannenförmig, mit der Halterung 102 und dem oberen Ende des Stromabnehmergestells gekoppelt. In einer vorteilhaften Ausführung ist der Behälter 114 unterhalb der Transferrolle 110a, 110b derart angeordnet, dass ein Großteil der Transferrolle 110a, 110b von dem offenen Behälter 114 funktionsfähig umschlossen ist. Insbesondere ist die Transferrolle 110a, 110b so in den Behälter 114 eingebettet, dass die umschießenden Wände des Behälters 114 sich mindestens über die Achse (Welle 108 oder Lagerzapfen 112a,b) hinaus erstrecken. In einem alternativen Ausführungsbeispiel erstrecken sich die umschließenden Wände des Behälters 114 nur bis unterhalb der Achse (Welle 108 oder Lagerzapfen 112a,b), wobei der Behälter 114 derart angeordnet ist, dass mindestens ein Teil der Transferrolle 110a, 110b funktionsfähig in das Frostschutzmittel 124 eintauchbar ist.

An den axial gegenüberliegenden Seitenwänden 120a und 120b des Behälters 114 sind jeweils zwei Zuleitungen 116a, 116b so angebracht, dass Frostschutzmittel 124 gleichzeitig von beiden Seiten in den Behälter 114 eingespeist werden kann. Die Zuleitungen 116a, 116b sind vorteilhafterweise hydraulisch abgeglichen, um auf beiden Seiten den selben Durchfluss zu erzielen. Ein Überlauf 118 oder Ablauf ist an einer vorderen 122a oder hinteren Seitenwand 122b vom Behälterboden beabstandet mittig zwischen den Zuleitungen 116a, 116b angebracht. Der Überlauf 118 bestimmt den Pegelstand des durchlaufenden Frostschutzmittels 124 und stellt außerdem sicher, dass bei einer Querbeschleunigung (z.B. Kurvenbeschleunigung, Zentrifugalkraft) oder einer Neigung des Fahrzeugs 10 (z.B. Gleisüberhöhung) keine Füllmengenänderung auftritt. Eine konstante Füllmenge des Frostschutzmittels 124 ist erforderlich, um das Systemgewicht und somit die gewählte Anpresskraft der Transferrolle 110a, 110b auf den Fahrdraht 18 konstant zu halten. Darüber hinaus beträgt die freie Fließstrecke einer Schmiermittelflut nur die Hälfte der Behälterlänge, was wiederum die daraus resultierende Pegeldifferenz, die aufgrund der gegenüber Wasser relativ hohen Viskosität des Frostschutzmittels 124 auftritt, halbiert.

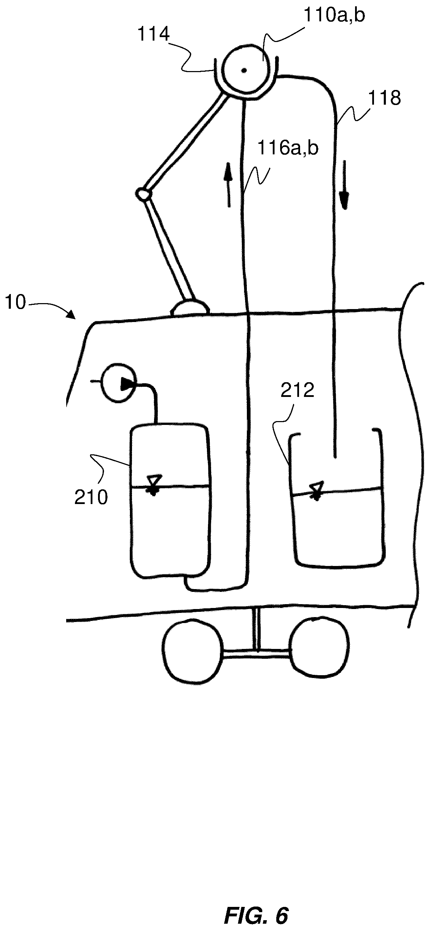

In einer Ausführungsform wird das Frostschutzmittel 124 über eine Pumpe von einem Vorratsbehälter 210 (siehe Beispiel in Figur 6) über die Zuleitungen 116a, 116b in den Behälter (Wanne) 114 gepumpt und über den am gewünschten Pegelstand angebrachten Überlauf 118 oder Ablauf wieder abgeführt, sodass das Frostschutzmittel 124 kontinuierlich durch den Behälter 114 strömt. In einer weiteren Ausführungsform wird das Frostschutzmittel 124 über einen mit Druckluft vorgespanntem Vorratsbehälter (nicht gezeigt) gefördert, wobei man somit auf die sonst erforderliche Dickstoffpumpe verzichten kann.

Das in Figur 6 dargestellte Beispiel illustriert die Versorgung mit Frostschutzmittel 124 über separate Vorratsbehälter 210 und Auffangbehälter 212. Der Auffangbehälter 212 kann beispielsweise auch mit einem Vakuumerzeuger so gekoppelt sein, dass Verstopfungen im Ablauf 118 entfernt werden, bzw. der Ablauf 118 regelmäßig durchspült wird. Alternativ kann die Versorgung mit Frostschutzmittel 124 auch mit nur einem Vorratsbehälter 210 realisiert werden, wobei Frostschutzmittel 124 über einen kontinuierlichen Umlauf zurück in den Vorratsbehälter 210 im Fahrzeug 10 läuft. Eine Pumpenregelung ist hierbei nicht erforderlich und Schmiermittel 124 wird lediglich über den Vorratsbehälter 210 im Fahrzeug 10 ergänzt, oder der leere Vorratsbehälter 210 wird einfach mit einem vollen, weniger kontaminierten Vorratsbehälter 210 ausgetauscht. Um den Anfall eines kontaminierten Rücklaufes zu vermeiden, kann das Frostschutzmittel 124 auch im Verlustbetrieb zugeführt werden. In einer solchen Ausführungsform wird der Behälter 114 z.B. ohne einen Rücklauf (reiner Verlustbetrieb) mit Frostschutzmittel 124 versorgt, wobei die Pegelhaltung über einen mittig angebrachten Pegelsensor oder Pegelschalter (nicht gezeigt) und eine entsprechend gesteuerte Pumpe/Ventil geregelt wird. Bei einer nicht ausreichenden Güte der Pegelregelung kann hierbei auch ein zusätzlicher Überlauf als Rückfallebene bereitgestellt werden.

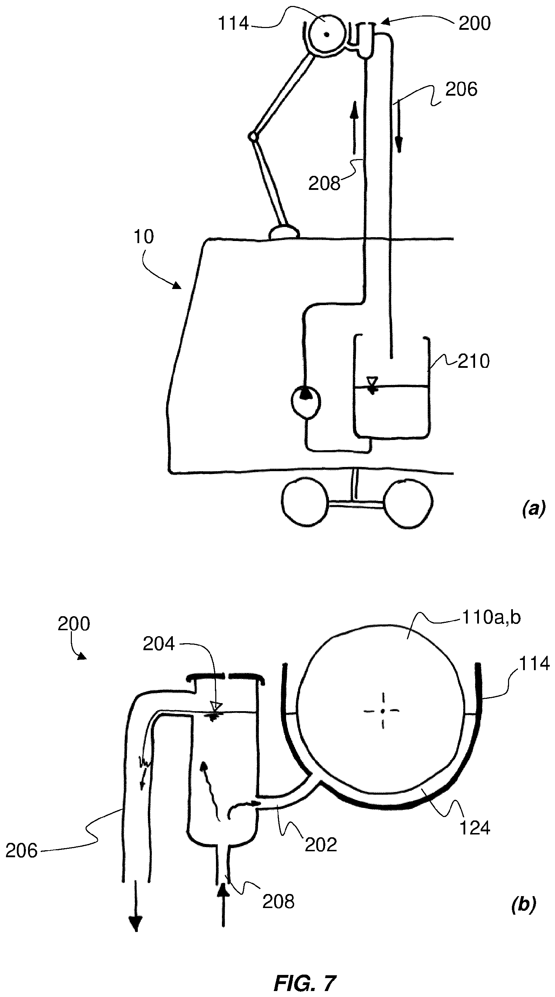

Figur 7 illustriert eine weitere Ausführungsform zur Versorgung des Behälters 114 mit Frostschutzmittel 124 ohne einen direkt an der Wanne 114 angebrachten Überlauf. Die Frostschutzmittellieferung erfolgt hierbei aus dem Vorratsbehälter 210 über eine Speiseeinheit 200 die über einen mittig an der Wanne 114 angebrachten Behälterzulauf 202 mit dem Behälter 114 verbunden ist. Die Speiseeinheit 200 ermöglicht eine Pegelhaltung 204 für den Verlustbetrieb ohne den Einsatz von Sensorik oder irgendwelcher beweglicher Teile. Der Rücklauf von Frostschutzmittel 124 entsteht hierbei über einen vom Pegelstand 204 der Speiseeinheit 200 abgehenden Ablauf 206 und frisches Frostschutzmittel 124 wird von unten aus dem Vorratsbehälter 210 über einen Zulauf 208 in die Speiseeinheit 200 zugeführt. Die Vorrichtung 200 verhindert somit, dass Kontaminant vom Behälter 114 in den Rücklauf gelangt, sodass das rücklaufende Frostschutzmittel 124 unbegrenzt wiederverwendet werden kann. Die Speiseeinheit 200 ist analog zum Überlauf 118 der oben beschriebener Ausführungsform mittig angebracht, damit Querbeschleunigungen nicht zu einer Änderung der Füllmenge der Wanne oder des Behälters 114 führen.

Während des Betriebs der Schmierrollenvorrichtung 100 wird Frostschutzmittel oder Schmiermittel 124 über Fluidbenetzung der glatten Oberfläche der in das Frostschutzmittel 124 teilweise eingetauchten Transferrolle 110a, 110b von dem Behälter 114 in Kontakt mit dem Fahrdraht 18 transportiert und aufgetragen.

In der bevorzugten Ausführungsform wird die Transferrolle 110a, 110b vom Fahrdraht 18 roll-gleitend gedreht (d.h. mitgenommen). Die Transferrolle 110a, 110b wird vorzugsweise mit einer vorbestimmten Umdrehungsgeschwindigkeit, die nicht direkt proportional (d.h. die Umfangsgeschwindigkeit der Transferrolle ist ungleich der Fahrgeschwindigkeit) zur Relativgeschwindigkeit zwischen Fahrdraht 18 und Fahrzeug 10 ist, angetrieben. Die Drehung der Transferrolle 110a, 110b dient ausschließlich der Schmiermittelförderung, sodass relativ wenige Umdrehungen pro Minute ausreichen, um eine gewünschte Menge Schmiermittel 124 aus dem vorgefüllten Behälter 114 zum Fahrdraht 18 zu transportieren.

Eine Veränderung des Anpressdruckes zwischen dem Fahrdraht 18 und der Transferrolle 110a, 110b reguliert die Umdrehungsgeschwindigkeit der Transferrolle 110a, 110b (passiv angetrieben) und somit die Menge (Schmierfilmdicke) des zum Fahrdraht 18 transportierten Frostschutzmittels 124. Der Anpressdruck zwischen dem Fahrdraht 18 und der Transferrolle 110a, 110b kann z.B. über geeignete einstellbare Federsysteme, hydraulische- oder pneumatische Zylinder (Aktuator) oder einen Motor über das Stromabnehmergestell 14 gesteuert werden. In einer Ausführungsform ist der Anpressdruck proportional zur Fahrzeuggeschwindigkeit geregelt, z.B. über eine über den Fahrtwind Auftrieb oder Antrieb generierende Tragfläche (oder irgendein anderer windabhängiger Aktuator), die mit dem Stromabnehmergestell funktionsfähig gekoppelt ist.

In einer anderen Ausführungsform wird die Umdrehungsgeschwindigkeit z.B. über eine Bremse (nicht gezeigt) geregelt. Die Bremse kann in der Form einer Viskosebremse, einer einfachen Reibungsbremse, einer Fliehkraftbremse oder einer elektrodynamischen Bremse ausgebildet sein, die die Umdrehungsgeschwindigkeit der Transferrolle 110a, 110b relativ konstant oder zumindest unter einer vorbestimmten Maximaldrehzahl hält. Die Bremse ist vorzugsweise über die Halterung 102 mit der Transferrolle 110a, 110b funktionsfähig gekoppelt. Viskose- und Fliehkraftbremsen, sowohl elektrodynamische Bremsen sind allgemein bekannt und werden deshalb nicht weiter ausgeführt.

In einem weiteren Ausführungsbeispiel wird die Transferrolle 110a, 110b über einen Motor angetrieben, der die Umdrehungsgeschwindigkeit und -richtung und somit die Fördermenge aktiv kontrolliert. Insbesondere kann die Transferrolle 110a, 110b in Richtung der Relativbewegung zwischen Transferrolle 110a, 110b und Fahrdraht 18 angetrieben werden (so wie beim passiven Antrieb), aber auch in die entgegengesetzte Richtung (entgegen der Relativbewegung), was gegebenfalls eine bessere Einstellung der Fördermenge des Schmiermittel 124 ermöglicht. Motorbetriebene Rollen sind aus der Technik bekannt und werden hier deshalb nicht näher erläutert.

Die vorliegende Erfindung stellt somit Mittel zum Steuern der Drehbewegung bereit, die die Umlaufgeschwindigkeit der Transferrolle dahingehend begrenzen, dass sich die Transferrolle 110 langsamer dreht als bei einem gleitfreien Abrollen entlang des Fahrdrahtes. Dies ist insbesondere bei größeren Geschwindigkeit wichtig, um ein Abschleudern von Frostschutzmittel 124 zu verhindern, und kann insbesondere durch geeignetes Steuern des Anpressdruckes, mittels einer Bremse oder mittels eines Motors erreicht werden.

Neben dem Auftragen von Frostschutzmittel ist die gemäß der vorliegenden Erfindung bereitgestellte Vorrichtung auch geeignet jede andere Art von Fahrdrahtbehandlungsmitteln aufzutragen. Als Fahrdrahtbehandlungsmittel kommen insbesondere in Frage: Glyzerin, Glykol, Öle, Alkohol, Salze oder Polymere, außerdem Frostschutzmittel auf Wasserbasis und Mittel mit speziellen Viskositätseigenschaften, beispielsweise thixotrope Flüssigkeiten und Mittel, deren physikalischen Eigenschaften es nicht erlauben, diese zu versprühen oder mittels durchtränkter Pinsel, Filze, Schwämme oder Bürsten aufzutragen.

### Bezugszeichenliste

- 10: Fahrzeug
- 12: Dach
- 14: Stromabnehmergestell
- 16: Schleifleiste
- 18: Fahrdraht
- 100: Schmiermittelvorrichtung
- 102: Halterung
- 104a,b: Maschinenschraube
- 106a,b: Lagerdorn
- 108: Welle
- 110a,b: Transferrolle
- 112a,b: Lagerzapfen
- 113: Antrieb
- 114: Behälter
- 116a,b: Zuleitung
- 118: Überlauf
- 120a,b: Behälterseitenwand
- 122a: vordere Behälterseitenwand
- 122b: hintere Behälterseitenwand
- 124: Schmiermittel, Frostschutzmittel, Glyzerin
- 200: Speiseeinheit
- 202: Behälterzulauf
- 204: Pegelstand / Pegelhaltung
- 206: Ablauf von Speiseeinheit
- 208: Zulauf in Speiseeinheit
- 210: Vorratsbehälter
- 212: Auffangbehälter

## Patentansprüche

1. Vorrichtung (100) zum Aufbringen von fließfähigem Frostschutzmittel (124) auf einen Fahrdraht (18) einer Oberleitung, von dem ein elektrisch angetriebenes Fahrzeug (10) mittels eines Stromabnehmers (14) elektrische Energie abnimmt, umfassend:
eine Halteeinrichtung, die sich vom Fahrzeug (10) in Richtung Fahrdraht (18) erstreckt;
eine horizontal und quer zur Fahrzeuglängenachse ausgerichtete Transferrolle (110), die axial drehbar mit der Halteeinrichtung gekoppelt ist, und die mit dem Fahrdraht in einen Kontakt bringbar ist,
einen offenen Behälter (114) für das Frostschutzmittel (124), der unterhalb der Transferrolle (110) und eine Umfangsfläche der Transferrolle (110) teilweise umschließend derart angeordnet ist, dass die Transferrolle (110) mit dem über den Behälter (114) zugeführten Frostschutzmittel (124) mittels einer Drehbewegung benetzbar ist, **dadurch gekennzeichnet, dass** die Vorrichtung (100) außerdem Mittel zum Steuern der Drehbewegung aufweist, die dazu eingerichtet sind eine Umlaufgeschwindigkeit der Transferrolle (110) dahingehend zu begrenzen, dass sich die Transferrolle (110) langsamer dreht als bei einem gleitfreien Abrollen entlang des Fahrdrahtes (18).

2. Vorrichtung (100) gemäß Anspruch 1, **dadurch gekennzeichnet, dass** ein Material der Transferrolle (110) tribologisch mit dem Fahrdraht (18) derart optimiert ist, dass der Fahrdraht (18) und die sich in Relativbewegung befindende Transferrolle (110) innerhalb eines vorbestimmten Anpressdruckbereichs verschleißarm roll-gleitend zusammenwirken, wobei das Material insbesondere ein Kunststoff, ein Kunststoff mit einer Grundmatrix aus fluorstabilisiertem Kunststoff, der mit einem Festschmierstoff gefüllt ist, oder ein metallischer Werkstoff mit guten Gleiteigenschaften, insbesondere Messing oder ein Metall mit einer abriebfesten Beschichtung oder einem aufgebrachten Gleitlack, insbesondere Aluminium mit Nikasilbeschichtung ist.

3. Vorrichtung (100) gemäß einem der voranstehenden Ansprüche, **dadurch gekennzeichnet, dass** die Umfangsfläche der Transferrolle (110) im Wesentlichen konvex ballig ausgebildet ist.

4. Vorrichtung (100) gemäß einem der voranstehenden Ansprüche, **dadurch gekennzeichnet, dass** die Halteeinrichtung eine Vorspanneinrichtung zum Bereitstellen des vorbestimmten Anpressdruckes zwischen Fahrdraht (18) und Transferrolle (110) umfasst.

5. Vorrichtung (100) gemäß Anspruch 4, **dadurch gekennzeichnet, dass** der Anpressdruck zwischen Fahrdraht (18) und Transferrolle (110) über die Vorspanneinrichtung wahlweise veränderbar ist.

6. Vorrichtung (100) gemäß einem der voranstehenden Ansprüche, **dadurch gekennzeichnet, dass** die Halteeinrichtung ein starr gekoppeltes Halteelement umfasst, das mit der Transferrolle (110) ein Gleitlager bildet.

7. Vorrichtung (100) gemäß einem der voranstehenden Ansprüche, **dadurch gekennzeichnet, dass** der Behälter (114) mindestens einen an einem axialen Ende angeordneten Zulauf (116a,b) zur Zuführung, und einen mittig zwischen den sich gegenüberliegenden axialen Enden an einer Seitenwand des Behälters angeordneten Ablauf (118) zur Abführung des Frostschutzmittels (124) umfasst.

8. Vorrichtung (100) gemäß Anspruch 7, **dadurch gekennzeichnet, dass** der Behälter (114) zwei Zuläufe (116a,b) umfasst, die an den sich gegenüberliegenden axialen Enden des Behälters (114) angebracht sind.

9. Vorrichtung (100) gemäß einem der Ansprüche 7 und 8, **dadurch gekennzeichnet, dass** der Ablauf (118) in einem vorbestimmten Abstand vom Behälterboden angebracht ist.

10. Vorrichtung (100) gemäß einem der voranstehenden Ansprüche, **dadurch gekennzeichnet, dass** die Umlaufgeschwindigkeit und/oder die Umlaufrichtung der Transferrolle (110) unabhängig von der Fahrzeuggeschwindigkeit regelbar ist.

11. Vorrichtung (100) gemäß Anspruch 10, **dadurch gekennzeichnet, dass** die Umlaufgeschwindigkeit und/oder die Umlaufrichtung der Transferrolle (110) über einen die Transferrolle (110) antreibenden Motor (113) regelbar ist.

12. Vorrichtung (100) gemäß Anspruch 10, **dadurch gekennzeichnet, dass** die Umlaufgeschwindigkeit der Transferrolle (110) über eine mit der Transferrolle (110) gekoppelten Bremse kontrollierbar ist.

## Claims

1. Device (100) for applying flowable antifreeze (124) to a contact wire (18) of an overhead line, from which an electrically driven vehicle (10) draws off electrical energy by means of a current collector (14), comprising:
a holding device which extends from the vehicle (10) in the direction of the contact wire (18);
a transfer roller (110) which is oriented horizontally and transversely with respect to the vehicle longitudinal axis, is coupled to the holding device in an axially rotatable manner, and can be brought into contact with the contact wire,
an open container (114) for the antifreeze (124) arranged below the transfer roller (110) and partially enclosing a circumferential surface of the transfer roller (110) in such a way that the transfer roller (110) can be wetted with the antifreeze (124) supplied via the container (114) by means of a rotational movement, **characterized in that** the device (100) also has means for controlling the rotational movement configured to limit a circumferential speed of the transfer roller (110) to the effect that the transfer roller (110) rotates more slowly than in the case of sliding-free rolling along the contact wire (18).

2. Device (100) according to Claim 1, **characterized in that** a material of the transfer roller (110) is optimized tribologically with the contact wire (18) in such a way that the contact wire (18) and the transfer roller (110) which is in relative movement interact in a rolling-sliding manner with low wear within a predetermined contact pressure range, wherein the material is in particular a plastic, a plastic with a base matrix composed of fluorine-stabilized plastic which is filled with a solid lubricant, or a metallic material with good sliding properties, in particular brass, or a metal with an abrasion-resistant coating or an applied sliding lacquer, in particular aluminium with a nikasil coating.

3. Device (100) according to one of the preceding claims, **characterized in that** the circumferential surface of the transfer roller (110) is of substantially convexly spherical design.

4. Device (100) according to one of the preceding claims, **characterized in that** the holding device comprises a pretensioning device for providing the predetermined contact pressure between the contact wire (18) and the transfer roller (110).

5. Device (100) according to Claim 4, **characterized in that** the contact pressure between the contact wire (18) and the transfer roller (110) can be varied selectively via the pretensioning device.

6. Device (100) according to one of the preceding claims, **characterized in that** the holding device comprises a rigidly coupled holding element which forms a plain bearing with the transfer roller (110).

7. Device (100) according to one of the preceding claims, **characterized in that** the container (114) comprises at least one inlet (116a,b), which is arranged at one axial end, for feeding, and an outlet (118), which is arranged centered between the mutually opposite axial ends on a side wall of the container, for discharging the antifreeze (124).

8. Device (100) according to Claim 7, **characterized in that** the container (114) comprises two inlets (116a,b) which are attached to the mutually opposite axial ends of the container (114).

9. Device (100) according to either of Claims 7 and 8, **characterized in that** the outlet (118) is attached at a predetermined distance from the container base.

10. Device (100) according to one of the preceding claims, **characterized in that** the circumferential speed and/or the circumferential direction of the transfer roller (110) can be regulated independently of the vehicle speed.

11. Device (100) according to Claim 10, **characterized in that** the circumferential speed and/or the circumferential direction of the transfer roller (110) can be regulated via a motor (113) driving the transfer roller (110).

12. Device (100) according to Claim 10, **characterized in that** the circumferential speed of the transfer roller (110) can be controlled via a brake coupled to the transfer roller (110).

## Revendications

1. Dispositif (100) pour appliquer un agent antigel fluide (124) sur un fil de contact (18) d'une caténaire, dont un véhicule à propulsion électrique (10) prélève de l'énergie électrique au moyen d'un pantographe (14), comprenant :
un dispositif de retenue qui s'étend depuis le véhicule (10) en direction du fil de contact (18) ;
un rouleau de transfert (110) orienté horizontalement et transversalement à l'axe longitudinal du véhicule, qui est couplé de manière axialement rotative au dispositif de retenue, et qui peut être amené en contact avec le fil de contact,
un récipient ouvert (114) pour l'agent antigel (124), qui est disposé en dessous du rouleau de transfert (110) et entourant partiellement une surface périphérique du rouleau de transfert (110) de telle sorte que le rouleau de transfert (110) puisse être mouillé au moyen d'un mouvement de rotation avec l'agent antigel (124) amené par le biais du récipient (114), **caractérisé en ce que** le dispositif (100) présente en outre des moyens pour commander le mouvement de rotation, qui sont conçus pour limiter une vitesse périphérique du rouleau de transfert (110) de telle sorte que le rouleau de transfert (110) tourne plus lentement que lors d'un déroulement sans glissement le long du fil de contact (18).

2. Dispositif (100) selon la revendication 1, **caractérisé en ce qu'**un matériau du rouleau de transfert (110) est optimisé tribologiquement avec le fil de contact (18) de telle sorte que le fil de contact (18) et le rouleau de transfert (110) se trouvant en mouvement relatif coopèrent de manière à rouler et glisser avec une faible usure à l'intérieur d'une plage de pression de contact prédéfinie, le matériau étant en particulier une matière plastique, une matière plastique avec une matrice de base en matière plastique stabilisée au fluor, qui est remplie d'un lubrifiant solide, ou un matériau métallique avec de bonnes propriétés de glissement, en particulier du laiton ou un métal avec un revêtement résistant à l'abrasion ou un vernis de glissement appliqué, en particulier de l'aluminium avec un revêtement de nikasile.

3. Dispositif (100) selon l'une quelconque des revendications précédentes, **caractérisé en ce que** la surface périphérique du rouleau de transfert (110) est réalisée de manière essentiellement convexe et bombée.

4. Dispositif (100) selon l'une quelconque des revendications précédentes, **caractérisé en ce que** le dispositif de retenue comprend un dispositif de précontrainte pour fournir la pression de contact prédéfinie entre le fil de contact (18) et le rouleau de transfert (110).

5. Dispositif (100) selon la revendication 4, **caractérisé en ce que** la pression de contact entre le fil de contact (18) et le rouleau de transfert (110) peut être modifiée au choix par le biais du dispositif de précontrainte.

6. Dispositif (100) selon l'une quelconque des revendications précédentes, **caractérisé en ce que** le dispositif de retenue comprend un élément de retenue couplé de manière rigide, qui forme un palier lisse avec le rouleau de transfert (110).

7. Dispositif (100) selon l'une quelconque des revendications précédentes, **caractérisé en ce que** le récipient (114) comprend au moins une arrivée (116a, b) disposée au niveau d'une extrémité axiale pour l'alimentation, et une évacuation (118) disposée au milieu entre les extrémités axiales opposées au niveau d'une paroi latérale du récipient pour l'évacuation de l'agent antigel (124).

8. Dispositif (100) selon la revendication 7, **caractérisé en ce que** le récipient (114) comprend deux arrivées (116a, b), qui sont montées au niveau des extrémités axiales opposées du récipient (114).

9. Dispositif (100) selon l'une quelconque des revendications 7 et 8, **caractérisé en ce que** l'évacuation (118) est montée à une distance prédéfinie du fond de récipient.

10. Dispositif (100) selon l'une quelconque des revendications précédentes, **caractérisé en ce que** la vitesse périphérique et/ou la direction périphérique du rouleau de transfert (110) peut être régulée indépendamment de la vitesse du véhicule.

11. Dispositif (100) selon la revendication 10, **caractérisé en ce que** la vitesse périphérique et/ou la direction périphérique du rouleau de transfert (110) peut être régulée par le biais d'un moteur (113) entraînant le rouleau de transfert (110).

12. Dispositif (100) selon la revendication 10, **caractérisé en ce que** la vitesse périphérique du rouleau de transfert (110) peut être commandée par le biais d'un frein couplé au rouleau de transfert (110).
